# EUROPÄISCHE PATENTSCHRIFT

(11) **EP 0 569 798 B1**
(45) Veröffentlichungstag und Bekanntmachung des Hinweises auf die Patenterteilung: **09.09.1998**
(21) Anmeldenummer: 93107019.7
(22) Anmeldetag: 30.04.1993
(51) Int. Cl.: A01F 12/44, A01D 41/12

(54) **Dichtung**
Shielding means
Joint de protection

(30) Priorität: 09.05.1992 DE 4215239
(43) Veröffentlichungstag der Anmeldung: 18.11.1993
(73) Patentinhaber: Deere & Company, Moline, Illinois 61265-8098 (US)
(72) Erfinder: Schuhmacher, Ernst, W-6650 Homburg-Einöd (DE); Lauer, Fritz, W-6791 Krähenberg (DE)
(74) Vertreter: Feldmann, Bernhard

(56) Entgegenhaltungen:
- DE-A- 2 149 974
- DE-A- 3 717 581
- DE-C- 811 510
- FR-A- 1 594 020
- US-A- 3 913 303
- US-A- 4 369 617

## Beschreibung

Die Erfindung betrifft eine Dichtung für eine Öffnung.

Öffnungen, durch die sich oszillierend bewegende Teile erstrecken, werden herkömmlich mit Schaumgummi oder einer Gummischeibe geschlossen, die auf den Teil aufgesetzt sind und sich mit diesem hin- und her bewegen. Die Dichtung weist dabei eine Erstreckung auf, die gewährleistet, daß die Öffnung in jeder Stellung des Teils noch verschlossen ist (siehe US-A-4369617).

Wird eine derartige Dichtung bei Mähdreschern zum Abdichten des Langlochs für die Siebkastenschwingen benutzt, besteht die Gefahr, daß der Innendruck in dem Siebkasten Staub, Getreide, Spreu und dergleichen zwischen der Dichtung und der die Öffnung aufnehmenden Wandung hindurch bläst und somit keine optimale Abdichtung stattfindet. Außerdem kann die Dichtung aufgrund des Luftdrucks und des sich im Bereich der Öffnung bewegenden Materials verbogen werden. Andererseits entstehen bei einer strammen Anlage, beispielsweise der vorgenannten Gummischeibe, zu vermeidende Scheuerstellen und Verschleiß.

Die der Erfindung zugrunde liegende Aufgabe wird darin gesehen, eine Dichtung vorzuschlagen, die eine bestmöglich Abdichtung der Öffnung bewirkt und einfach herstellbar ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird durch den Steg eine Versteifung der Dichtung bewirkt, die verhindert, daß die Dichtung aufgrund des Luftdrucks von der Öffnung weggedrückt wird oder sich aufgrund anderer Gründe, z. B. aufgrund von Materialanlagerungen, verbiegt und somit die Öffnung freigibt.

Die Umrahmung der Platte mittels eines umlaufenden Stegs ergibt eine glockenförmige Ausbildung der Dichtung, die geringe Anlageflächen hat und senkrecht zu dem Rahmen bzw. der Wandung flexibel ist. Der sich aus dem umlaufenden Steg ergebende Rand schließt zudem den Raum um die Öffnung sicher ab.

Die Verwendung eines elastischen Materials läßt auch eine Bewegung des Teils quer zu der Haupterstreckungsrichtung der Öffnung zu, so daß Toleranzen im Antrieb ausgeglichen werden können. Besonders gute Eigenschaften weist Polyurethan auf, aus dem die Dichtung durch ein Spritzverfahren hergestellt werden kann.

Eine Erhöhung der Dichtigkeit tritt ein, wenn die Dichtung unter Vorspannung eingesetzt wird.

In einfacher Weise wird die Dichtung stets in der richtigen Lage bezüglich des Teils und der Öffnung gehalten, wenn sie direkt und vorzugsweise mittels Hohlnieten an dem Teil selbst oder an der von dem Teil bewegten Komponente angebracht ist. Der Anbringungsort der Dichtung richtet sich danach, wie die Öffnung ausgerichtet ist und auf welcher Bahn sich die Dichtung bewegen soll.

Zur Materialoptimierung ist es vorteilhaft, die Form der Dichtung der Kontur der Öffnung und/oder der Bewegungsbahn des Teils anzupassen. So kann z. B. bei einem Langloch als Öffnung und einer mehr oder weniger elliptischen Bewegungsbahn die Dichtung länger als breit ausgebildet werden.

Eine umfangreiche und somit effektive Benutzung einer derartigen Dichtung findet sich bei Mähdreschern und Mühlen, wo eine Vielzahl schwingender Elemente, z. B. Siebkasten, Rücklaufboden, Schwingförderer und dergleichen vorgesehen sind, in deren Umgebung ein hoher Staubanteil herrscht, der nicht nach außen dringen soll. Wenn die Dichtung mit dem Steg an der Innenseite des Rahmens oder Gehäuses entlanggleitet, kann sich kein innerhalb des Gehäuses schwebender Schmutz in der Tasche der Dichtung ansammeln und diese von der Wandung oder dem Rahmen wegdrücken. Außerdem entstehen an der Außenseite keine Schleifspuren.

In der Zeichnung ist ein nachfolgend näher beschriebenes Ausführungsbeispiel der Erfindung dargestellt. Es zeigt:
- Fig. 1: eine Erntemaschine
- Fig. 2: eine erfindungsgemäße Dichtung im eingebauten Zustand, in Seitenansicht und im Schnitt und
- Fig. 3: die Dichtung im eingebauten Zustand in Vorderansicht.

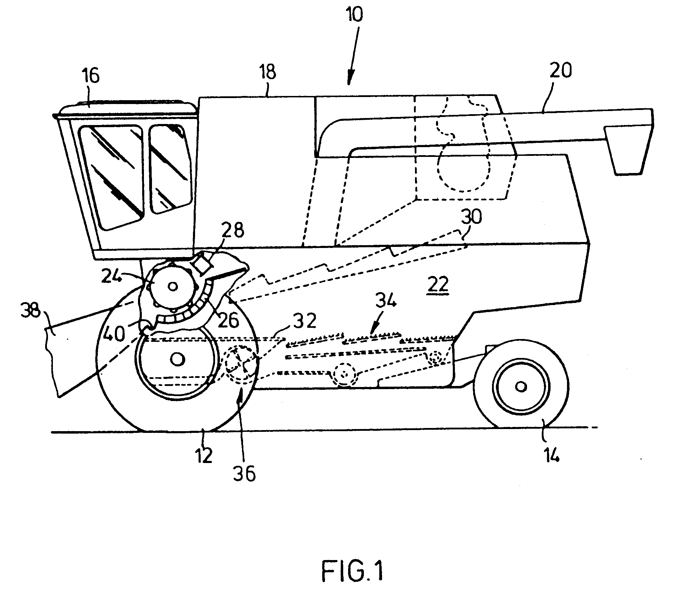

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage, eine Mühle mit einer Oszillationsreinigung oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30 sowie auf einem Vorbereitungsboden 32 und einem Siebkasten 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von dem Siebkasten 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

Der Vorbereitungsboden 32, der Siebkasten 34 sowie ein gegebenenfalls vorgesehener Rücklaufboden unterhalb der Schüttler 30 sind in dem Rahmen 22 der Erntemaschine in der Zeichnungsebene oszillierend gelagert, wozu Schwingarme 42 vorgesehen sind, die sich durch Öffnungen 44 in dem Rahmen 22 erstrecken, wobei die Öffnungen 44 mittels Dichtungen 46 geschlossen werden.

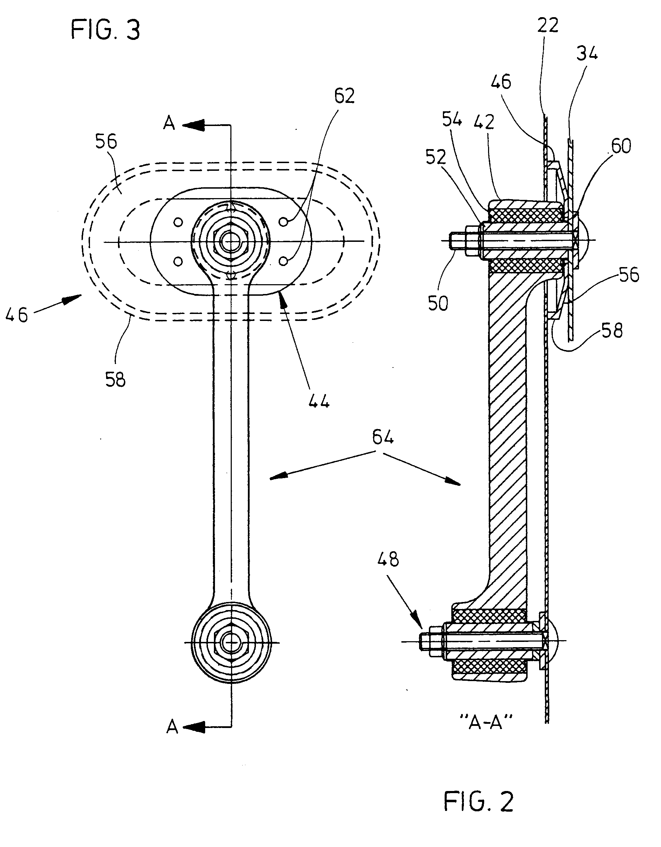

Figur 2 zeigt eine erfindungsgemäße Dichtung 46 in Verbindung mit dem Siebkasten 34, in dem mehrere Siebe gehalten und gemeinsam schwingend bewegbar sind.

Der Schwingarm 42 ist einenends mittels eines Lagers 48 schwenkbar an dem Rahmen 22 gelagert und greift anderenends mittels einer Schraube 50, einer Stahlbüchse 52 und einer Gummibüchse 54 beweglich an dem Siebkasten 34 an. Hierzu erstrecken sich die Schraube 50, die Stahlbüchse 52, die Gummibüchse 54 und der obere Teil des Schwingarms 42 durch die Öffnung 44. In diesem Ausführungsbeispiel bilden der Schwingarm 42, die Schraube 50, die Stahlbüchse 52 und die Gummibüchse 54 einen pendelnden oder oszillierenden Teil 64, der sich gegenüber dem Rahmen 22 und im wesentlichen in der Haupterstreckungsebene der Öffnung 44 bewegt. Selbstverständlich kann der Teil 64 aber auch aus einem einzigen Bestandteil, z. B. einem Zapfen oder dergleichen bestehen, der sich durch die Öffnung 44 erstreckt; jedenfalls kommt es auf den Aufbau des Teils 64 nicht an.

Die Öffnung 44 nimmt in diesem Ausführungsbeispiel die in Figur 3 gezeigte Form ein und ist somit im wesentlichen oval; jedenfalls ist sie länger als breit. Die Öffnung 44 muß nicht in dem tragenden Teil des Rahmens 22 vorgesehen werden, sondern kann sich vielmehr in einer Wandung aus Blech desselben befinden, die den Siebkasten 34 und die übrigen Reinigungskomponenten nach außen abschließt. Die Öffnung 44 ist ausreichend groß und derart angeordnet, daß sich der Schwingarm 42 bzw. der Teil 64 störungsfrei in ihr bewegen kann.

Die Dichtung 46 weist die in Figur 3 in unterbrochenen Linien dargestellte Form auf und setzt sich aus einer Platte 56 und einem Steg 58 zusammen, die in diesem Ausführungsbeispiel als ein einziger Teil ausgebildet sind. Als Material ist Polyurethan gewählt, das gute Gleiteigenschaften und eine hohe Verschleißfestigkeit aufweist; andererseits könnte auch Gummi verwendet werden. Insbesondere aus Figur 3 wird ersichtlich, daß die Platte 56 eine wesentlich größere Erstreckung aufweist als die Öffnung 44, so daß bei der maximalen Bewegungsmöglichkeit des Schwingarms 42 in der Öffnung 44 stets eine Bedeckung der Öffnung 44 gegeben ist. Die Platte 56 ist nicht plan, sondern leicht gewölbt ausgebildet, wie man dies in Figur 2 erkennen kann. Die Wölbung ist so getroffen, daß in einem Mittenbereich der Platte 56 ein größerer Abstand zu dem Rahmen 22 herrscht als in einem Randbereich. Die Platte 56 ist mit einer Öffnung 60 versehen, durch die sich die Schraube 50 und die Stahlbüchse 52 erstrecken, und mit mehreren kleinen Durchlässen, die der Aufnahme von Hohlnieten 62 dienen. Die Öffnung 60 und die Durchlässe werden vorzugsweise bereits beim Spritzen, Gießen, Pressen oder einem sonstigen Arbeitsvorgang Spannungsfrei eingearbeitet. Auf diese Weise kann die Dichtung 46, wie in diesem Ausführungsbeispiel gezeigt, an dem Siebkasten 34 angebracht und mit diesem bewegt werden. Es ist darauf zu achten, daß sich die Dichtung 46 nicht aus ihrer Hauptbewegungsrichtung drehen kann und somit die Öffnung 44 nicht in jeder Stellung überdeckt; dies kann insbesondere dadurch gewährleistet werden, daß die Dichtung 46 starr an dem Siebkasten 34 angebracht ist oder drehbar auf der Schraube 50 gelagert und in ihrer Stellung geführt wird.

Der Steg 58 schließt im Randbereich der Platte 56 an diese stoffschlüssig an und gibt der Dichtung 46 mit der vorerwähnten Wölbung im Querschnitt ein glockenförmiges Profil. Die Höhe des Stegs 58 entspricht ungefähr der Ausdehnung der gewölbten Platte 56 in der Richtung senkrecht zu der Haupterstreckungsebene der Öffnung 44. Die Materialstärke des Stegs 58 ist größer gewählt als die der Platte 56. Die Anordnung der Dichtung 46 ist so getroffen, daß der Steg 58 an der Innenseite des Rahmens 22 anliegt, während die Platte 56 an den Siebkasten 34 anschließt. Die Dichtung 46 ist unter Vorspannung in den Spalt zwischen der Innenseite des Rahmens 22 und der Außenseite des Siebkastens 34 eingesetzt, so daß der Steg 58 stets an der Innenfläche des Rahmens 22 entlangreibt. Im ausgebauten Zustand weist die Platte 56 eine größere Erstreckung in der Axialrichtung der Schraube 50 auf als im eingebauten Zustand.

## Patentansprüche

1. Dichtung (46) zum Bedecken einer von einem Rahmen oder Wandung (22) aufgenommenen Öffnung (44), durch die sich ein im wesentlichen in der Haupterstreckungsebene der Öffnung (44) bewegbarer Teil (64) erstreckt, mit einer Platte (56) deren flächenmäßige Erstreckung größer ist als die der Öffnung (44), welche Platte (56) so auf den bewegbaren Teil (64) aufsetzbar ist, daß sie sich mit dem bewegbaren Teil (64) hin- und her bewegen kann, dadurch gekennzeichnet, daß die Dichtung einstückig aus einem elastischen Material gebildet ist und sich aus der Platte (56) und einem die Platte (56) versteifenden, quer zur Platte (56) verlaufenden, im Randbereich der Platte (56) an diese dichtend anschließenden und am Rahmen oder Wandung (22) anlegbaren Steg (58) zusammensetzt, wobei die Platte (56) derart gewölbt ist, daß ihr Abstand zu der von der freien Endkante des Stegs (58) definierten Anlagefläche im Bereich ihrer Anlage an dem bewegbaren Teil (64) größer ist als im Bereich des Stegs (58).

2. Dichtung nach Anspruch 1, dadurch gekennzeichnet, daß der Steg (58) die Platte (56) umrahmt.

3. Dichtung nach einem oder mehreren der vorherigen Ansprüche, dadurch gekennzeichnet, daß sie aus Polyurethan insbesondere gespritzt wird.

4. Dichtung nach einem oder mehreren der vorherigen Ansprüche, dadurch gekennzeichnet, daß sie unter Vorspannung an dem Rahmen oder der Wandung (22) anliegt.

5. Dichtung nach einem oder mehreren der vorherigen Ansprüche, dadurch gekennzeichnet, daß sie an dem sich bewegenden Teil (64), insbesondere mit diesem beweglich oder an einer von dem Teil (64) bewegten Komponente gebracht ist.

6. Dichtung nach einem oder mehreren der vorherigen Ansprüche, dadurch gekennzeichnet, daß sie im Falle einer als Langloch ausgebildeten Öffnung (44) entsprechend länger als breit ausgebildet ist.

7. Dichtung nach einem oder mehreren der vorherigen Ansprüche, dadurch gekennzeichnet, daß sie zur Abdichtung eines Langlochs in einem Gehäuse eines Mähdreschers oder einer Siebvorrichtung verwendet wird.

8. Dichtung nach Anspruch 7, dadurch gekennzeichnet, daß sie zwischen einem Rahmen (22) oder einer Wandung und einem Siebkasten (34), einem Rücklaufboden, einem Vorbereitungsboden oder dergleichen vorgesehen ist.

9. Dichtung nach Anspruch 8, dadurch gekennzeichnet, daß der Steg (58) an der dem Siebkasten (34), dem Rücklaufboden, dem Vorbereitungsboden oder dergleichen zugelegenen Seite des Rahmens (22) oder der Wandung zur Anlage kommt.

## Claims

1. A seal (46) for covering an opening (44) in a frame or wall (22), through which extends a part (64) movable substantially in the plane of major extent of the opening (44), with a plate (56) whose areal extent is greater than that of the opening (44), which plate (56) can be so fitted on the movable part (64) that it can move to and fro with the movable part (64), characterized in that the seal is formed in one piece from an elastic material and is composed of the plate (56) and a rib (58) stiffening the plate (56), extending transverse to the plate (56), adjoining the plate in sealed manner in the edge region of the plate (56) and adapted to be applied to the frame or wall (22), wherein the plate (56) is so arched that its distance from the bearing surface defined by the free edge of the rib (58) is greater in the region where it bears on the movable part (64) than in the region of the rib (58).

2. A seal according to claim 1, characterized in that the rib (58) frames the plate (56).

3. A seal according to one or more of the preceding claims, characterized in that it is in particular injection moulded from polyurethane.

4. A seal according to one or more of the preceding claims, characterized in that it bears under prestress on the frame or the wall (22).

5. A seal according to one or more of the preceding claims, characterized in that it is fitted on the moving part (64), in particular movable therewith or on a component moved by the part (64).

6. A seal according to one or more of the preceding claims, characterized in that it is of correspondingly longer than wide form in the case of an opening (44) in the form of a slot.

7. A seal according to one or more of the preceding claims, characterized in that it is used to seal a slot in a housing of a combine harvester or a sieve device.

8. A seal according to claim 7, characterized in that it is provided between a frame (22) or a wall and a sieve frame (34), a returns floor, a processing floor or the like.

9. A seal according to claim 8, characterized in that the rib (58) comes into abutment with the side of the frame (22) or the wall facing the sieve frame (34), the returns floor, the processing floor or the like.

## Revendications

1. Joint d'étanchéité (46) pour fermer une ouverture (44) aménagée dans un cadre ou une paroi (22) par laquelle s'étend une partie (64) déplaçable essentiellement dans le plan principal d'extension de l'ouverture (44), comportant une plaque (56), dont l'étendue en surface est supérieure à celle de l'ouverture (44), laquelle plaque (56) peut être montée sur la partie mobile (64) de telle sorte qu'elle peut se déplacer en va-et-vient avec la partie mobile (64), caractérisé en ce que le joint d'étanchéité est formé d'un seul tenant en un matériau élastique et se compose de la plaque (56) et d'une barrette (58) qui renforce la plaque (56), s'étend transversalement par rapport à la plaque (56), se raccorde d'une manière étanche à la plaque (56) dans la zone marginale de cette dernière et peut être appliqué contre le cadre ou la paroi (22), la plaque (56) étant cintrée de telle sorte que sa distance par rapport à la surface d'application, qui est définie par le bord de l'extrémité de la barrette (58), est plus grande dans la zone de l'application de la plaque contre la partie mobile (64) que dans la zone de la barrette (58).

2. Joint d'étanchéité selon la revendication 1, caractérisé en ce que la barrette (58) entoure la plaque (56).

3. Joint d'étanchéité selon une ou plusieurs des revendications précédentes, caractérisé en ce qu'il est formé notamment par moulage par injection de polyuréthane.

4. Joint d'étanchéité selon une ou plusieurs des revendications précédentes, caractérisé en ce qu'il s'applique sous précontrainte contre le cadre ou la paroi (22).

5. Joint d'étanchéité selon une ou plusieurs des revendications précédentes, caractérisé en ce qu'il s'applique contre la partie mobile (64), en étant déplaçable notamment avec cette dernière, ou contre un composant déplacé par la partie (64).

6. Joint d'étanchéité selon une ou plusieurs des revendications précédentes, caractérisé en ce que, dans le cas d'une ouverture (44) agencée sous la forme d'un trou allongé, le joint est formé avec une longueur correspondante supérieure à sa largeur.

7. Joint d'étanchéité selon une ou plusieurs des revendications précédentes, caractérisé en ce qu'il est utilisé pour fermer de façon étanche un trou allongé dans un carter d'une moissonneuse-batteuse ou d'un dispositif de tamisage.

8. Joint d'étanchéité selon la revendication 7, caractérisé en ce qu'il est prévu entre un cadre (22) ou une paroi et un boîtier à tamis (34), un fond de renvoi, un fond de préparation ou analogue.

9. Joint d'étanchéité selon la revendication 8, caractérisé en ce que la barrette (58) vient s'appliquer la face du cadre (22) ou de la paroi, qui est tournée vers la boîte à tamis (34), le fond de retour, le fond de préparation ou analogue.
